# EUROPEAN PATENT APPLICATION

(11) **EP 2 801 767 A1**
(43) Date of publication of application: **12.11.2014**
(21) Application number: 13354015.3
(22) Date of filing: 06.05.2013
(51) Int. Cl.: F24J 2/46, F24J 2/48

(54) **Method for manufacturing a solar absorber body, a solar absorber body and a concentrating solar power system comprising said solar absorber body.**

(71) Applicant: Commissariat à l'Énergie Atomique et aux Énergies Alternatives, 75015 Paris (FR); Salzgitter Mannesmann Précision Etirage SAS, 89600 St-Florentin (FR)
(72) Inventor: Fleury, Gatien, F-04800 Gréoux-les-Bains (FR); Boulay, Benoit, F-89570 Neuvy Sautour (FR); Duhamel, Jean-Marc, F-51300 Vitry-le-François (FR)
(74) Representative: Talbot, Alexandre

(57) **Abstract**

The invention relates to a method for manufacturing a solar absorber body (1), said method comprising the steps of:
- a tube designed to contain a heat transfer fluid is provided,
- a diffusion barrier layer (7) is deposited on the outer surface of the tube by thermal spraying, the diffusion barrier layer (7) comprising at least one refractory material, the diffusion barrier layer (7) having a roughness, less than or equal to 0.4µm, and preferentially between 0.1µm and 0.4µm.

## Description

### Technical field of the invention

The invention relates to a method for manufacturing a solar absorber body comprising the following steps: providing a tube designed to contain a heat transfer fluid, depositing a diffusion barrier layer onto the outer surface of the tube and a solar absorption layer over said a diffusion barrier layer.

The invention also relates to a solar absorber body comprising a tube, a diffusion barrier layer comprising at least a refractory material.

The invention also relates to a concentrating solar power system comprising such a solar absorber body.

### Background art

Concentrating solar power systems are designed to collect heat by absorbing sunlight. Classically, sunlight is concentrated and focused onto a solar absorber body containing a heat transfer fluid. The solar absorber body can be, for example an elongated absorber tube through the interior of which flows the heat transfer fluid. The solar absorber body absorbs the sunlight and convert it to heat, which is transmitted to the heat transfer fluid. The temperature of the fluid then strongly increases.

The heat transfer fluid can then be used in a standard turbine generator for electricity generation. For example, parabolic troughs, Fresnel reflectors and solar power towers can be used to convert the sunlight to thermal electric power.

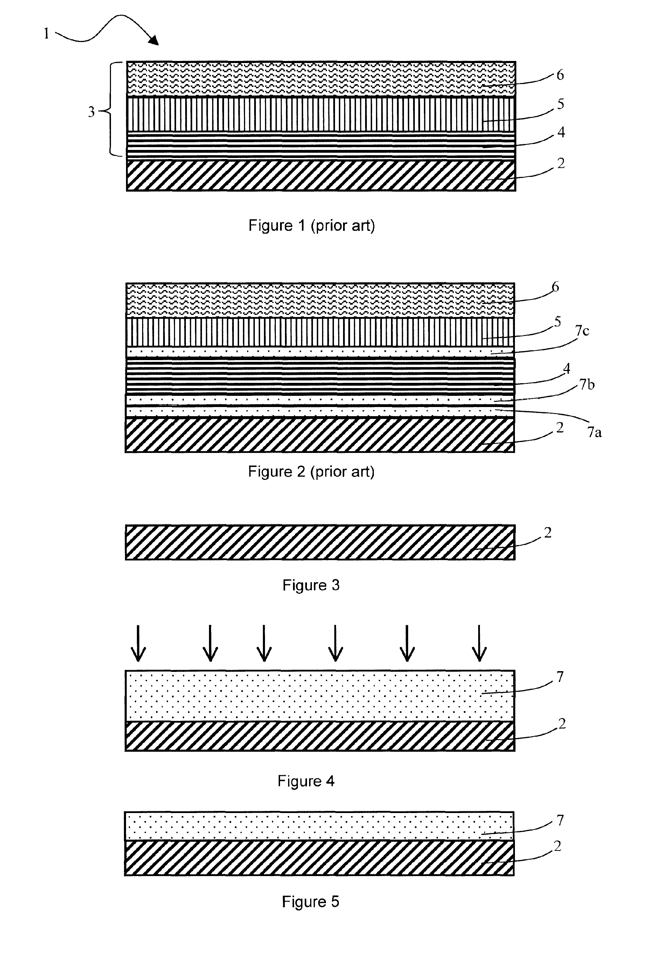

Generally, as represented in figure 1, the solar absorber body 1 contains a substrate 2, usually an elongated tube, covered by a selective coating 3 comprising an infrared reflective layer 4, a solar absorption layer 5 and most often an antireflective layer 6. The selective coating 3 must present specific optical properties such as a high solar absorption and a low thermal emissivity.

For example, for vacuum application, one of the most common selective coating comprises an infrared reflective layer 4 made of a platinum layer, a solar absorption layer 5 made of a cermet material, for example W/Al₂O₃ and most often an antireflective layer 6 made of SiO₂ or Si₃N₄. By cermet material we understood a composite material composed of ceramic (cer) and metallic (met) materials: metallic microparticles can be incorporated into a ceramic for instance.

The operating temperatures determine the efficiency of the solar absorber body 1. Furthermore, the solar absorber body 1, and more particularly the selective coating 3 need to be thermally stable without impairing the reflective and absorbing properties. Recent works have been carried out in order to improve the quality and the performances of the selective coating 3.

As represented in the document US2009/0208761, solar absorber bodies 1 comprise, for example, diffusion barrier layers 7 to prevent diffusion processes between the different layers of the solar absorber bodies 1. As represented in Figure 2, a first barrier layer 7a of chromium iron oxide is applied to a stainless steel tube by means of thermal oxidation at a temperature higher than 400°C. Silicon oxide layer 7b can then be applied by physical gas phase deposition (PVD). A third diffusion barrier layer 7c can also be applied between the infrared reflective layer 4 and the solar absorption layer 5. The preferred thickness of the barrier layer is between 5nm to 100nm. The thermal stability of the absorber coating allows operating temperature up to 550°C under non-oxidizing atmosphere. And this process can only be applied to tube materials able to form a stable oxide layer onto the outer surface by oxidation. By "stable", it is meant an oxide layer that does not peel away from the substrate ("oxide spalling") under thermal cycling. For tubes made up of low-alloyed material, the tubes remain still insufficiently stable for long term use at high temperature under oxidizing conditions.

Likewise, the document "Review of Mid- to high-temperature Solar Reflective Absorber Materials" (Technical Report of the National Energy Laboratory, 2002, Kennedy C.) also discloses the introduction of diffusion barrier layer to improve the thermal stability of the coating for high-temperature application (temperature more than 400°C). For example, stainless steel substrate can be coated with a thin Cr₂O₃ barrier layer. A silver layer, the IR-reflective layer, is then deposited and overcoated with another thin layer of Cr₂O₃. Finally, a silicon layer, the absorber layer, is deposited. The Cr₂O₃ barrier layers having an intermediate coefficient of thermal expansion between the substrate and the silicone layer, it improves the absorber layer resistance to thermal cycling stress and prevents the diffusion between the layers located on both sides on the barrier layer from ambient temperature to 500°C. However, these materials have not been tested under air and brought to fruition and the feasibility of producing these coatings at industrial-scale is not addressed.

The document WO2009/140051 discloses a barrier layer applied by electroplating. For example, a nickel barrier layer can be obtained by electroplating a nickel sulfamate solution. Nevertheless, electroplating presents some disadvantages: it is a relatively complex process that makes it necessary to master a deep know how, the kind of materials that can be used is relatively limited by the available chemical baths and furthermore the process can bring pollutions that will affect the optical quality of the coating.

Nevertheless, the method for manufacturing such a solar absorber body 1, comprising the tube and the selective absorber coating 3, remains difficult to implement. One of the challenges to be solve is to produce a diffusion barrier layers 7, that is thermally stable for long-term applications under oxidizing atmosphere and at temperature superior to 400°C. This diffusion barrier is especially important when the material of the substrate is not a stainless steel.

### Object of the invention

One object of the invention is to remedy the shortcomings of the prior art, and in particular to propose a method for manufacturing a solar absorber body that is thermally stable under oxidizing atmosphere, such as air, and that is simple, easy to implement enabling such a body to be obtained with a high yield.

It is a further object of the invention to provide a solar absorber body with a long-lasting service life under air and cold/hot cycling conditions.

It is another object to provide a concentrating solar power system comprising a solar absorber body, which is thermally stable.

According to the invention, this object is achieved by a method for manufacturing a solar absorber body, a solar absorber body and a concentrating solar power system comprising said solar absorber body, according to the indexed claims.

### Brief description of the drawings

Other advantages and features will become more clearly apparent from the following description of particular embodiments of the invention given for non-restrictive example purposes only and represented in the appended drawings, in which:
- Figures 1 and 2 represent a cross-sectional view of a solar absorber body 1, according to prior art,
- Figure 3 to 7 represent a cross-sectional view of a solar absorber body at different steps of the manufacturing method, according to one embodiment the invention,
- Figure 8 represents a cross-sectional view of a tube overcoated by a selective coating, according to one embodiment of the invention.

The coating thickness of each layer is shown much greater than it actually is in order to simplify the illustrations. The drawings are not necessarily to scale.

### Description of particular embodiments of the invention

Figures 3 to 7 represents schematically the method for manufacturing a solar absorber body 1, including the following steps:
- providing a substrate 2,
- depositing a diffusion barrier layer 7 on the outer surface of the substrate 2 by thermal spraying, the diffusion barrier layer 7 comprising at least one refractory material, the diffusion barrier layer 7 having a roughness, less than or equal to 0.4µm, and preferentially between 0.1µm and 0.4µm.

Initially, as represented in Figure 3, a substrate 2 is provided. The substrate 2 can be planar, curved or tubular. The substrate 2 may therefore be an uncoated or coated material. The substrate 2 can be selected among various metals or metals compounds.

According to a preferential embodiment, the substrate 2 is an uncoated tube. A heat transfer medium can flow through the interior of the tube. The heat transfer medium can be a fluid, e.g. oil or water vapour.

The thickness of the tube is preferably between 1,25 mm and 6,35 mm depending on the operating pressure and temperature. Furthermore, advantageously it is a cold drawn seamless tube to get excellent mechanical properties at high temperature and in particular under pressure. The preferred target range of temperature is 150°C-600°C, and more particularly between 300°C and 600°C, the pressure range is, advantageously, 2bar-200bar, and more particularly between 50bar and 200bar.

The tube may be made of an iron, nickel or titanium alloy, the principal alloying elements, in terms of percentage per weight, of these alloys being iron, nickel or titanium respectively. In particular, the substrate 2 is a steel tube. The tube may be a stainless steel tube. The tube is preferably a low alloy steel tube or a high alloy steel tube. These grades of steel contain less than 12.5% by weight of chromium. These steels are different from stainless steels, which usually contain more than 12.5% by weight of chromium. These steels usually have better mechanical properties, for example higher Young's Modulus, and are cheaper especially because they do not contain any nickel. Nevertheless, they do not form thin passive layer mainly constituted of Cr₂O₃, Al₂O₃, SiO₂ or MgO as the usual stainless steels do.

Low alloy steel constitutes a category of ferrous materials that exhibit relevant mechanical properties as the result of additions of alloying elements such as carbon, chromium, manganese and molybdenum. Total alloying elements can range up to 8% by weight. For example, P195GH, 13CrMo44 and 10CrMo9-10 are low alloy steel. They can be used up to temperatures between 350°C and 550°C under relatively harsh pressure conditions. By harsh pressure conditions, we understood a pressure between 50bar and 200bar.

High alloy steels contain more alloying elements than the low alloy steel, the chromium content remaining less than 11 % by weight. They can be used for temperature up to 650°C while keeping a reasonable creep resistance. X10CrMoVNb9-1 and X11CrMoWVNb97 are, for instance, high alloy steels. These alloy steels are advantageously cheaper than stainless steels, especially those that contain nickel as alloying elements such as AISI 304 or 316. Advantageously, low alloy steel presents excellent thermal conductivity enhancing heat transfer from the substrate to the heat carrier medium. Preferably, the tube is a low-alloy steel tube, in particular made of 10CrMo9-10, which presents a good thermal conductivity, low coefficient of thermal expansion (for example, in the range 10-15 ppm/K between 20 and 550°C), low cost and good resistance to creep deformation.

Prior to thermal spray, the outer surface of the tube can be roughened by corundum blasting so as to increase significantly the roughness of the surface. This promotes subsequent adhesion of the barrier layer to the substrate. In a preferred embodiment, the roughness, evaluated with the Ra measurement defined by NF ISO 4287, prior deposition of the diffusion barrier layer, is between 2 µm and 10 µm. Prior to subsequent treatment, the tube, after being roughened can be washed and/or rinsed to remove dirt or other contaminants from the surfaces of the tube.

As represented in Figure 4, a diffusion barrier layer 7 is thermal sprayed onto the outer surface of substrate 2. The diffusion barrier layer 7 is in direct contact with the substrate 2. As the substrate 2 is preferably a tube, the outer surface is understood to be a surface that extends on the one hand over the length of the tube and on the other hand over a circular arc.

In a preferred embodiment, the diffusion barrier layer 7 extends to an uniform height over the circumference of the tube. Additionally, the barrier layer preferably covers the full length of the tube. Therefore, all or essentially all the outer surface of the tube is coated with the barrier layer.

Thermal spraying is a coating process in which a material is heated for example by electrical means, for instance this is the case of plasma spraying, and then sprayed onto a surface. It can provide thick coatings over large areas at high deposition rates as compared to thermal oxidation for example or physical vapour deposition (PVD) or chemical vapour deposition (CVD) process. It allows processing times to be shortened and throughput to be increased.

The diffusion barrier layer 7 may be deposited by any thermal spraying methods. Deposition by plasma spraying or high velocity oxygen fuel spraying is preferable compare to lower particle velocity coating method in order to obtain a barrier layer with high density.

Moreover, the coatings obtained by these plasma spray techniques present high bond strength and provide protection against high temperature oxidation and corrosion. Various shapes of substrates can advantageously be coated, such as plates, tubes, shells, etc.

The composition of the diffusion barrier layer 7 does not depend of the composition of the substrate 2. Many coatings can be deposited, for example ceramic, metallic layers, cermet layers or corrosion-resistant alloys.

In a preferred embodiment, a diffusion barrier layer 7 comprising at least one refractory material is deposited onto the tube. What is meant here by refractory material is a material chemically and physically stable at high temperatures, for example above 300°C. This material possesses high melting points. Aluminium, chromium, silicon, zirconium and magnesium oxides as well as silicon carbide, tungsten carbide, boron nitride, zirconium diboride or Cobalt-Chromium alloys are considered to be refractory materials for example.

Refractory materials comprise refractory metals. For example, molybdenum, niobium, tantalum, tungsten and rhenium are refractory metals. A wider definition of refractory metals includes also other metals such as titanium, vanadium, chromium, zirconium, hafnium, osmium, ruthenium and iridium. Preferentially, the chemical composition of the barrier layer is different from the chemical composition of the substrate.

The deposited materials advantageously present reflective optical properties preferentially in the spectral range of wavelength (λ) superior to 1,5 µm. By reflective properties, we understood that the percentage of incident radiation reflected by the deposited materials is at least 70% and preferably more than 85%. Any suitable reflective material may be used, taking into account factors such as but not limited to the wavelength of light to be reflected (preferably a spectral range of λ>1,5 µm) and cost.

In a preferred embodiment, the refractory metal is made from molybdenum or tungsten, is a nickel-chromium base alloy, ZrB₂ or a mixture of ZrB₂ and SiC. Said nickel-chromium base alloy advantageously contains chromium, iron, silicon and boron. These materials present, advantageously, intrinsic infrared mirror properties, *i.e* the incident infrared light is reflected. Preferably more than 75% of the incident infrared light is reflected. What is meant by infrared light is an electromagnetic radiation with wavelengths comprise between 1,4 µm and 1000 µm, from short wavelength to far infrared. Cheaper materials such as Cr₂O₃, cobalt-chromium alloys, WC, Al₂O₃ could also be used, even if their optical properties are not as good as the first group cited. Preferentially, the barrier layer is a stainless alloy. By stainless material, it should be understood a material spontaneously forming a stable passivation layer such as for instance chromina, magnesia, alumina, silica when subject to oxidant atmosphere such a air.

Advantageously, the diffusion barrier layer 7 reduces or prevents diffusion of any oxidizing species such as O₂ or its ions from the atmosphere to the substrate 2, or on the contrary from atoms of the substrate 2 into the solar absorber layer and/or from the outer layer to the substrate 2. The comprehensive prevention of O₂ and its ions diffusion within the substrate can thus be guaranteed, especially oxygen in air can't diffuse significantly from the outer layer to the steel substrate, even at high temperature. Thus, it is possible to use alloy steel substrate rather than stainless steel substrates. Indeed, once alloy steel substrates are protected from oxidation, phenomenon appearing especially in air at high temperature, they are promising candidates for solar absorber body applications in term of mechanical properties and cost.

The thickness of the diffusion barrier layer 7 is more than 25 µm. Preferably, the thickness is between 40 µm and 200 µm. If the thickness is too thin, the diffusion of O₂ can occur through the diffusion barrier layer 7 and if the layer is too thick, in addition to the cost increase, cracking and peeling could damage said barrier layer. Therefore, this thickness range is a good compromise.

In a preferred embodiment, prior to depositing the next layer, for example, prior to depositing the solar absorption layer 5, the method comprises polishing (arrows in Figure 4) the diffusion barrier layer 7. Preferably, the diffusion barrier layer 7 is polished until the surface roughness Ra is less than or equal to 0.4µm, and preferentially between 0.1µm and 0.4µm. This polishing step improves the reflectivity of the diffusion layer 7. For example, at 450°C, the infrared emissivity of a molybdenum layer decreases by 20% after polishing from Ra>2 µm to Ra<0,4µm. Finest is the polishing, lower the roughness and the emissivity are. For roughness lower than 0,1µm, a decrease in the roughness has not any more significant effect on the emissivity.

In a particular embodiment, the polishing is an electrochemical machining. Electrochemical machining (ECM) is a method to remove metal by an electrochemical process. A DC power supply is connected to the workpiece immersed in the electrolytic solution. The electrolyte is advantageously an acid solution such as a solution containing sulfuric, nitric or hydrochloric acid or a basic solution such as a solution containing potassium or sodium hydroxide.

For example, the process is achieved at current densities of about 10A/cm² and at relative low voltage from 5V to 30 V (continue or pulse). In some embodiments, a NaNO₃ solution at 300 g/I is used. These experimental conditions enable to obtain a reasonable polishing duration less than 10 minutes.

The rate of material machining does not depend on the mechanical properties. Advantageously, the odd-shape angles and intricate contours can be easily removed from the piece to be polished. High removal rates can be reached with no thermal or mechanical stresses, as compared as other polishing methods.

Prior to ECM, the workpiece could be cleaned and/or rinsed.

Rinsing steps, for example in demineralized water, can also follow the electrochemical machining to remove residual electrolyte and by-products ECM reaction. A drying step could also be performed.

According to an alternative embodiment, the polishing is a mechanical grinding. Mechanical grinding removes material from the workpiece by abrasion, preferably using an abrasive belt or a flap wheel. They are suitable for grinding all types of contour and profile surfaces. Polishing involves using one or more wheels or belts to abrade the passivation layer. Abrasive material, grain size, grain spacing are essential parameters in mechanical grinding process. Wet or dry mechanical grinding operations can be made. The abrasive material is selected according to the hardness of the workpiece material. Aluminium oxide, silicon carbide or boron nitride can be used. Advantageously, aluminium oxide grains are selected. Two successive polishing are realized, the first one with a grain size of 100 so as to obtain a fast cutting and the second one with a grain size of 500 so as to obtain a precise and uniform work finishing. Preferably, the polishing is performed in dry conditions to prevent surface pollution with organic elements. Organic elements such as grease can decrease the adherence of the following layer to be deposited onto the passivation layer.

In another particular embodiment, the surface roughness performances could be achieved by using a mechanical cold forming process Thus, the substrate could be processed through a die (and respectively an inside mandrel if tubes are processed) of hard metal (preferably made of carbide compound) where either the wall thickness and diameter of the substrate are processed. Cold forming factors should be designed so that the roughness ratio decreases. Lubricant such as soap, reactive oil or forming oil, or any other type of product is used to assist the cold forming process. Using such a method on low (respectively medium) alloy steels could ensure a reduction of the roughness by 2 or 5 times depending on the type of lubricant, the relevant cold forming factors, and the initial state.

As an alternative embodiment, the use of the stable oxides of the substrate specifically obtained during the processing routes of the substrate could be such a layer.

Depending on the chemical and physical properties of the diffusion barrier layer 7, electrochemical machining, mechanical grinding or mechanical forming processing or none of these processes would be chosen.

In a particular embodiment, a thermal treatment is applied to the diffusion barrier layer 7 after polishing. The temperature of said thermal treatment is preferably between 150°C and 950°C and the duration of said thermal treatment is preferably between 10 minutes and 1000 minutes. Preferably, the thermal treatment is realized under oxidizing atmosphere. By oxidizing atmosphere, it should be understood, generally, air, oxygen or water-enriched air, the atmosphere containing at least 5% in volume of a precursor such as oxygen, for example O₂. Such a thermal treatment is realized so as to stabilize the diffusion barrier layer 7 after polishing.

Subsequently, a solar absorption layer 5 is deposited onto the diffusion barrier layer 7. The solar absorption layer 5 is in direct contact with the diffusion barrier layer 7. Preferably, the solar absorption layer 5 is not in contact with the substrate 2: the diffusion barrier layer 7 is located between the substrate 2 and the solar absorption layer 5.

The solar absorption layer 5 can also be a stack, comprising several layers that produce the desired optical properties. The optical properties are usually obtained by combining a highly reflecting coating (called IR-mirror), a layer that has a high solar absorption and a low IR-emissivity, and an antireflecting layer that improves the solar absorption.

The solar absorption layer 5 can be deposited by physical vapour deposition. A stack comprising a platinum-based IR-mirror together with a cermet of Cr/Cr₂O₃, Mo/Al₂O₃ or W/Al₂O₃ with a SiO₂ antireflecting layer on top of it could for instance be used. Another option for the elaboration of the solar absorption layer 5 could be to use a selective painting containing high temperature resistant pigments, with or without the addition of a SiO₂ antireflecting layer. The solar absorption layer 5 absorbs a high percentage of incident solar light and emits a percentage of the energy absorbed as radiated heat. Preferentially, the target is to absorb more than 80% of the incoming solar light, whereas the emissivity should stay under 25% of the emissivity of a black body at the working temperature of the absorber.

Preferably, the solar absorber body 1 has a high spectral absorption capacity over the solar wavelength range, i.e. the absorber body absorbs the incident solar radiation and convert it into another energy, i.e. heat, which is transferred by conduction to the adjacent layer. By high absorption capacity, we understood that the material absorbs between more than 80% of the incident solar radiation in the spectral range 300nm<λ<1600nm and by high yield of incident radiation, we understood that the thermal and optical losses in the solar absorber body are less than 25%. The losses can be quantified by spectrophotometry for example. This means that the solar absorption body 1 does only radiate back a small amount of heat and only loses a slight amount of incident solar radiation through reflection.

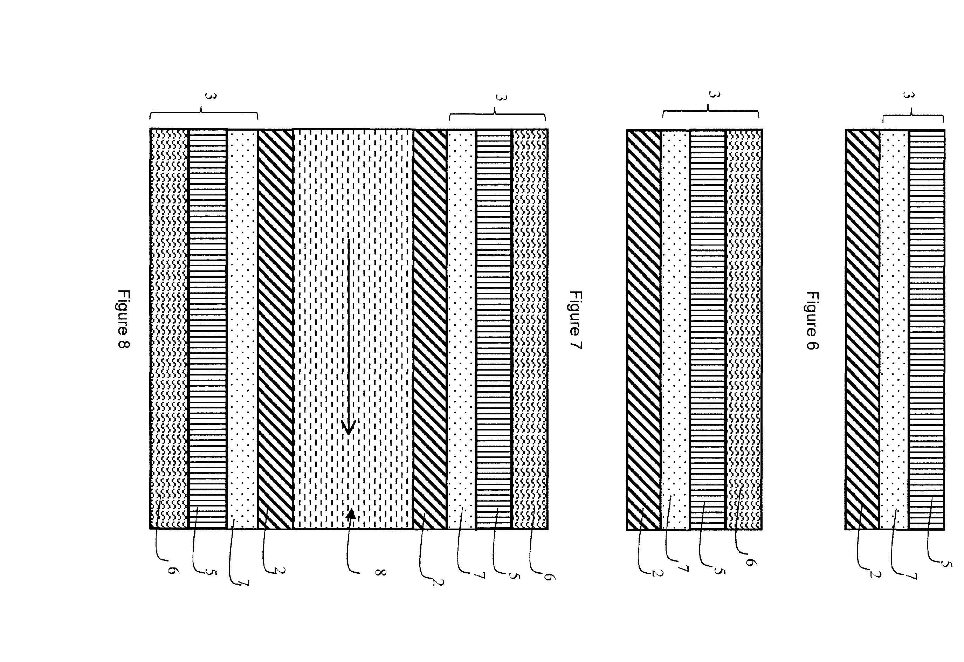

The selective coating 3 illustrated on figures 6 and 7 comprises a diffusion barrier layer 7, a solar absorption layer 5 and optionally an antireflective layer 6.

An additional layer, the antireflective layer 6, can be deposited on top of the solar absorption layer 5. The topmost layer of the antireflective layer 6 can be textured to increase solar absorption and minimize surface reflection. Texturing can be applied by any suitable methods.

In another embodiment, the selective coating 3 could also comprise an additional infrared reflective layer 4. This infrared reflective layer 4 could be deposited between the diffusion barrier layer 7 and the solar absorber layer 5. However, this layer can be completely omitted, since it has been discovered that for suitable materials and polishing of the diffusion barrier layer 7, said barrier layer has infrared mirror properties.

As represented in Figure 8, the obtained solar absorber body 1 comprises from the innermost layer to the outermost layer:
- a tube substrate 2, in which flows a heat carrier medium 8 (arrow in Figure 8),
- a diffusion barrier layer 7 comprising a refractory material, in direct contact with the outer surface of the tube, the thickness of said diffusion barrier layer 7 being more than 25 µm and the refractory material being preferentially chosen among molybdenum or tungsten, a nickel-chromium base alloy, ziconium diboride, or a mixture of ziconium diboride and silicon carbide. Additionally, in a particular embodiment, a solar absorption layer 5 in direct contact with the diffusion barrier layer 7 can be deposited, the solar absorption layer 5 being separated from the tube by the diffusion barrier layer 7. An additional antireflective layer 6 can also be deposited on top of the solar absorption layer 5.

The refractory material could also be chosen among materials such as Cr₂O₃, a cobalt-chromium alloy, WC, or Al₂O₃.

The diffusion barrier layer 7, advantageously, is constituted by refractory materials or a single refractory material.

The tube of the solar absorber body 1 is made of steel with a chromium content less than 12,5% by weight and in particular, the tube is made of low-alloy steel, the total alloy content being less than 8% by weight.

In a preferred embodiment, the diffusion barrier layer 7 has a thickness between 40 µm and 200 µm.
The diffusion barrier layer 7 has a roughness between 0.1µm and 0.4µm.

In a preferred embodiment, the solar absorber body 1 is constituted of:
- a tube substrate 2, in which flows a heat carrier medium 8,
- a diffusion barrier layer 7; the diffusion barrier layer 7 is preferentially elaborated from a powder of ZrB₂, which can contain less than 10% by volume of an additional element such as SiC. The additional element is, advantageously, also in powder form. Preferentially, the diffusion barrier layer 7 is only constituted of ZrB₂ or is only constituted of ZrB₂ and SiC.
- an antireflective layer 6 on top of the diffusion barrier layer 7.

In this particular solar absorber body 1, the diffusion barrier layer 7 acts as a solar absorption layer.

Advantageously, the antireflective layer 6 enables to obtain improved performances.

An embodiment employs the solar absorber body 1 described above in solar energy applications and in particular in a concentrating solar power system designed to collect heat by absorbing sunlight. They comprise a solar concentrator so as to concentrate and focus sunlight onto the solar absorber body containing the heat transfer fluid. The solar absorber body absorbs then the sunlight and convert it to heat, which is transmitted to the heat transfer fluid. The temperature of the fluid then strongly increases and can be used to heat steam in a standard turbine generator for electricity generation.

In particular, this includes Fresnel lenses, mirrors, solar power towers and parabolic troughs collectors.

During the different steps, deposition and/or rinsing, the tube can be sealed at each end by any suitable caps to prevent contamination inside the tube.

The method for manufacturing the solar absorber body 1 described in the foregoing is simple to implement and relatively inexpensive. It enables to obtain thick diffusion barrier layers 7 between the tube and the adjacent layers. This reduces and/or prevents O₂ diffusion and ensures a long-term stability, even at high temperature, of material. Therefore, the solar absorber body 1 exhibits long service life at high temperature.

The method provides high thermal and structural stabilities for the combined layers, excellent adhesion between the substrate 2 and the adjacent layers and between the diffusion barrier layer 7 and the adjacent layers, enhanced resistance to thermal and mechanical stresses and acceptable thermal conductivity.

Moreover, as the substrate is stable at temperature higher than 400°C under atmospheric conditions, the selective coating 3 presents long-life performances: it is stable during 25 years.

Additionally, the coating is mechanically stable and highly oxidation-resistant: structural modifications and oxidation of the substrate 2 are for example prevented thanks to the presence of the diffusion barrier layer 7 according to the invention. With such a diffusion barrier layer, even substrates made of instable materials under oxygen (such as low-alloy steel materials) can be used.

Finally, it presents both high absorption and low emission properties: an absorption more than 90% of the incident light and an infrared emission lower than 20% as compared to a black body reference at 450°C.

The invention is not limited to the embodiments described above for non-restrictive example purposes. Although the example given is that of a steel tube, the manufacturing process could be applied to other tube materials.

## Claims

1. A method for manufacturing a solar absorber body (1), said method comprising the steps of:
- providing a tube designed to contain a heat transfer medium,
- depositing a diffusion barrier layer (7) on the outer surface of the tube, the diffusion barrier layer (7) comprising at least a refractory material, **characterized in that** the diffusion barrier layer 7 is deposited by thermal spraying
and **characterized in that** the diffusion barrier layer (7) has a roughness, prior to depositing the solar absorption layer 5, less than or equal to 0.4µm, and preferentially between 0.1µm and 0.4µm.

2. A method according to claim 1, **characterized in that** it comprises depositing an antireflective layer (6) on top of the diffusion barrier layer (7).

3. A method according to claim 1, **characterized in that** it comprises depositing a solar absorption layer (5) over said diffusion barrier layer (7).

4. A method according to claim 3, **characterized in that** it comprises depositing an antireflective layer (6) on top of the solar absorption layer (5).

5. A method according to any one of claims 1 to 4, **characterized in that** thermal spraying is plasma spraying or high velocity oxygen fuel spraying.

6. A method according to any one of claims 1 to 5, **characterized in that** the diffusion barrier layer (7) has a thickness more than 25 µm, and preferentially between 40 µm and 200 µm.

7. A method according to any one of claims 1 to 6, **characterized in that** the refractory material is selected among molybdenum, tungsten, Al₂O₃, Cr₂O₃, a nickel-chromium alloy, a cobalt-chromium alloy, WC or ZrB₂, or a mixture of SiC and ZrB₂.

8. A method according to any one of claims 1 to 7, **characterized in that** it comprises polishing the diffusion barrier layer (7) prior to depositing the solar absorption layer (5) or the antireflective layer (6).

9. A method according to claim 8, **characterized in that** polishing is an electrochemical machining, a mechanical grinding or a mechanical forming process.

10. A method according to any one of claims 8 to 9, **characterized in that** a thermal treatment is applied to the diffusion barrier layer (7) after polishing, the temperature of said thermal treatment being between 150°C and 950°C and the duration of said thermal treatment being between 10 minutes and 1000 minutes.

11. A method according to any one of claims 1 to 10, **characterized in that** the tube is made of steel with a chromium content less than 12.5% by weight.

12. A method according to claim 11, **characterized in that** the steel material contains less than 8 % by weight of allowing elements.

13. A method according to claim 12, **characterized in that** the steel material is chosen among P195GH, 13CrMo44, 10CrMo9-10,

14. A method according to claim 11, **characterized in that** the steel material is chosen among X10CrMoVNb9-1 and X11CrMoWVNb97.

15. A solar absorber body (1) comprising:
- a tube,
- a diffusion barrier layer (7) comprising at least a refractory material, in direct contact with the outer surface of the tube, the thickness of said diffusion barrier layer (7) being more than 25 µm.

16. A solar absorber body (1) according to claim 15, **characterized in that** it comprises a solar absorption layer (5) in direct contact with the diffusion barrier layer (7), the solar absorption layer (5) being separated from the tube by the diffusion barrier layer (7).

17. A solar absorber body (1) according to claim 15, **characterized in that** it comprises an antireflective layer (6) in direct contact with the diffusion barrier layer (7), the antireflective layer (6) being separated from the tube by the diffusion barrier layer (7).

18. A solar absorber body according to any one of the claims 15 to 17, **characterized in that** the refractory material is selected among molybdenum, tungsten, Al₂O₃, Cr₂O₃, a nickel-chromium alloy, a cobalt-chromium alloy, WC, ZrB₂, or a mixture of ZrB₂ and SiC.

19. A solar absorber body according to any one of claims 15 to 18, **characterized in that** the tube is made of steel with a chromium content less than 12.5 % by weight.

20. A solar absorber body according to claim 19, **characterized in that** the tube is made of low-alloy steel.

21. A solar absorber body according to any one of claims 15 to 20, **characterized in that** the diffusion barrier layer (7) has a thickness between 40 µm and 200 µm.

22. A solar absorber body according to any one of claims 15 to 21, **characterized in that** the diffusion barrier layer (7) has a roughness between 0.1µm and 0.4µm.

23. A concentrating solar power system comprising a solar absorber body (1) according to any one of claims 15 to 22.
